Europäisches Patentamt

European Patent Office

Office européen des brevets

(19)

(11) Veröffentlichungsnummer: **0 304 505 B1**

# EUROPÄISCHE PATENTSCHRIFT

(12)

(45) Veröffentlichungstag der Patentschrift: **24.04.91**

(51) Int. Cl.⁵: **B23K 26/16**

(21) Anmeldenummer: **87112434.3**

(22) Anmeldetag: **27.08.87**

(54) **Vorrichtung zum Schweissen von Werkstücken mittels eines Laserstrahles.**

(43) Veröffentlichungstag der Anmeldung:
**01.03.89 Patentblatt 89/09**

(45) Bekanntmachung des Hinweises auf die
Patenterteilung:
**24.04.91 Patentblatt 91/17**

(84) Benannte Vertragsstaaten:
**CH DE FR GB LI SE**

(56) Entgegenhaltungen:
**US-A- 3 982 206**
**US-A- 4 590 248**
**US-A- 4 653 495**

(73) Patentinhaber: **Firma Carl Zeiss**

**W-7920 Heidenheim (Brenz)(DE)CH DE FR LI
SE**

Patentinhaber: **CARL ZEISS-STIFTUNG HAN-
DELND ALS CARL ZEISS**

**W-7920 Heidenheim (Brenz)(DE)GB**

(72) Erfinder: **Grimm, Wolfgang, Dr.**
**Max-Beckmann-Strasse 59**
**W-7920 Heidenheim(DE)**
Erfinder: **Paysan, Heinz-Wilhelm**
**Albstrasse 51**
**W-7080 Aalen-Waldhausen(DE)**
Erfinder: **Schürle, Hermann**
**Bischof-Fischer-Strasse 110**
**W-7080 Aalen(DE)**

## Beschreibung

Die Erfindung betrifft eine Vorrichtung zur Materialbearbeitung mittels eines Laserstrahles.

Es sind Vorrichtungen bekannt, bei denen ein, beispielsweise von einem Nd-YAG-Laser erzeugter Strahl verwendet wird um ein Werkstück zu bearbeiten. Entsprechend der Energiedichte des Laserstrahles am Auftreffpunkt kann diese Bearbeitung als Bohren, Schneiden oder Schweißen des Werkstückes ausgeführt werden.

Bei allen diesen Bearbeitungsverfahren entstehen Spritzer des getroffenen Materials, die auch in Richtung der Laserquelle geschleudert werden. Da solche Materialspritzer die empfindliche Laser-Optik verunreinigen können, verwendet man üblicherweise ein zwischen Laser und Werkstück angeordnetes Abschlußfenster, welches den Laser gegen Materialspritzer abschirmt.

Ein solches Abschlußfenster besteht aus Glas, das mit einer zur Transmissionserhöhung dienenden Schicht versehen sein kann. Derartige Abschlußfenster sind relativ teuer, da ihre Oberflächen hochgenau planparallel sein müssen um störende optische Einflüsse zu vermeiden.

Es hat sich nun gezeigt, daß beispielsweise beim Schweißen von Metallen sich die dabei entstehenden Metallspritzer auf Abschlußfenstern aus Glas einbrennen. Dabei entstehen unter anderem Muschelbrüche im Glas. Diese Verschmutzungen des Abschlußfensters bewirken Änderungen und Verzerrungen des durch dieses Fenster tretenden Laserstrahles, da der Querschnitt dieses Strahles klein gegenüber der Größe der entstandenen Verschmutzungen bzw. Verunreinigungen ist.

Bei Vorrichtungen zum Schweißen von Metallen, insbesondere zum Punktschweißen mittels eines Laserstrahles führen die Verschmutzungen des Abschlußfensters infolge der optischen Beeinflussung des Laserstsrahles zu schleichenden Qualitätsminderungen. Diese können bei automatisch betriebenen Anlagen erst bei einer späteren Prüfung der Werkstücke erkannt werden.

Um die Zahl solcher fehlerhaften Schweißungen zu begrenzen hilft man sich bisher damit die Standzeit der Abschlußfenster zu begrenzen. Dies führt dazu, daß schon nach wenigen Stunden Betriebszeit die Abschlußfenster ausgewechselt werden müssen.

Die dadurch verursachten häufigen Produktionsunterbrechungen führen zu einer Verteuerung der Produktion, die durch den Preis der Ersatz-Fenster noch gesteigert wird.

Es ist nun die Aufgabe der Erfindung eine Vorrichtung zur Materialbearbeitung mittels eines Laserstrahles nach dem Oberbegriff des Anspruches 1 so auszubilden, daß das Abschlußfenster eine ganz wesentlich erhöhte Standzeit erreicht, so daß damit eine deutliche Senkung der Produktionskosten ermöglicht wird.

Diese Aufgabe wird nach dem kennzeichnenden Merkmal des Anspruchs 1 dadurch gelöst, daß das Abschlußfenster aus einem hochvernetzten, duroplastischen Kunststoff besteht.

Aus der US-A-4 590 248 ist ein Verfahren zur Herstellung einer Kunststofflinse großer Härte und guter Kratzfestigkeit aus Dietylenglycolbiscarbonat bekannt. Weitere Hinweise auf die Verwendung dieses Linsenmaterials sind nicht gegeben.

Die US-A-4 653 495 zeigt eine Vorrichtung zur medizinischen Behandlung von Anomali en der Haut mittels eines Lasers. Das vom Laser erzeugte Licht wird einem Faserbündel zugeführt, an dessen distalem Ende ein Handstück vorgesehen ist. Auf das freie Ende dieses Handstücks wird eine Schutzscheibe aufgeklippt, die beispielsweise aus Acrylharz besteht. Zur eigentlichen Behandlung wird das freie Ende des Handstücks mit der Schutzscheibe auf die zu behandelnde Hautstelle aufgesetzt. Die Schutzscheibe kann während der Behandlung verunreinigt werden und ist dann auszuwechseln. Die Verunreinigungen auf der Schutzscheibe sind völlig unabhängig vom Scheibenmaterial, d.h. die Standzeit der Schutzscheibe läßt sich durch Materialwahl nicht beeinflussen.

Im Gegensatz dazu beeinflußt bei der Vorrichtung nach der Erfindung das Material des Abschlußfensters dessen Standzeit entscheidend. Ein nach der Erfindung ausgebildetes Abschlußfenster erreicht überraschend beim Einsatz in einer Vorrichtung zum Punktschweißen mittels eines Laserstrahls eine Standzeit bis zu mehreren Tagen, während die Standzeit von bekannten Abschlußfenstern aus Glas bei nur 2-4 Stunden liegt.

Es ist vorteilhaft das Abschlußfenster aus einem Duroplasten herzustellen, der einen Elastizitätsmodul $>1,5$ kN/mm$^2$ (nach DIN 53457) und einen (nach DIN 53456 ermittelten) KugeldruckWert $>80$ N/mm$^2$ aufweist.

Diese Werte erfüllt der Kunststoff Allyldiglycolcarbonat (ADC) der auch unter der Bezeichnung CR 39 bekannt und im Handel ist. Dieser Kunststoff ist hochvernetzt und weist duroplastische Eigenschaften auf. Er läßt sich gießen und weist im auspolymerisiertem Zustand eine solche Härte auf, daß er sich optisch bearbeiten läßt. Diese optische Bearbeitbarkeit ist sehr wichtig, da das Abschlußfenster eine sehr genau bearbeitete planparallele Platte darstellen muß.

Der verwendete Kunststoff besteht aus Makromolekülen, deren Aufbau eine hohe Elastizität in mikroskopisch kleinen Bereichen gewährleistet. Diese Mikroelastizität ist dafür verantwortlich, daß bei einem Abschlußfenster nach der Erfindung die beim Schweißen entstehenden und auf dieses Fenster auftreffenden Materialspritzer abprallen ohne eine bleibende Veränderung des Fenstermaterials zu bewirken. Erst nach einer sehr langen Standzeit, die bis zu 10 Tagen betragen kann, bewirkt das ständige Bombardement des Fensters bleibende und störende Verunreinigungen, die ein Auswechseln des Abschlußfensters erforderlich machen.

Die Mikroelastizität des Materials spielt bei dem Abschlußfenster nach der Erfindung eine sehr wesentliche Rolle. Es gibt bis heute keine Maßzahl für diese Mikroelatizität, doch läßt sich nach neueren Untersuchungen die Elastizität mikroskopisch kleiner Bereiche mittels des sogenannten Ultraschall-Mikroskops bestimmen. Damit ist es auch mit Hilfe eines solchen Mikroskopes möglich Materialien auszuwählen welche eine Mikroelastizität aufweisen, die für ein Abschlußfenster in Laser-Materialbearbeitungsanlagen ausreicht.

Das Abschlußfenster nach der Erfindung wird zweckmäßig mit einer zur Transmissionserhöhung dienenden Schicht versehen, die auf der dem Laser zugewandten Oberfläche durch Aufdampfen erzeugt wird.

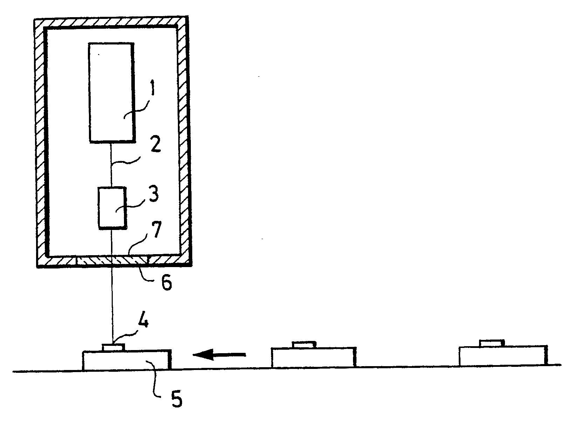

Die beigefügte Figur zeigt schematisch eine Vorrichtung zum Punktschweißen mittels eines Laserstrahles die mit einem Abschlußfenster nach der Erfindung ausgestattet ist.

In dieser Figur ist mit (1) ein Laser beispielsweise Nd-YAG-Laser bezeichnet. Der von diesem emittierte hochenergetische Strahl (2) wird mittels einer Optik (3) so beeinflußt, daß er an der Auftreffstelle (4) auf dem Werkstück (5) den zu einer Punktschweißung erforderlichen Durchmesser bei der erforderlichen Energiedichte hat.

Zwischen Werkstück (5) und Optik (3) ist ein Abschlußfenster (6) einfach auswechselbar angeordnet. Dieses Fenster besteht aus Allyldiglocylcarbonat und ist auf seiner dem Laser (1) zugewandten Oberfläche mit einer zur Transmissionserhöhung dienenden Schicht (7) versehen.

Bei der Bearbeitung werden die Werkstücke (5) nacheinander zur Auftreffstelle (4) befördert. Sobald ein Werkstück die Schweißposition erreicht hat, wird der Laser (1) eingeschaltet und bewirkt eine Punktschweißung. Die beim Schweißvorgang entstehenden Materialspritzer prallen am Abschlußfenster (6) elastisch ab, so daß dieses während einer sehr langen Standzeit, die im automatischen Betrieb der Anlage ohne weiteres 10 Tage bei gleichbleibender Fertigungsqualität erreichen kann, nicht ausgewechselt werden muß.

**Ansprüche**

1. Vorrichtung zum Schweißen von Werkstücken mittels eines Laserstrahles bestehend aus einem Laser und einer zwischen diesem und dem zu bearbeitenden Werkstück angeordneten Abschlußfenster, dadurch gekennzeichnet, daß dieses Abschlußfenster (6) aus einem hochvernetzten, duroplastischen Kunststoff besteht.

2. Vorrichtung nach Anspruch 1, dadurch gekennzeichnet, daß der Kunststoff einen Elastizitätsmodul > 1,5 kN/mm² (nach DIN 53457) aufweist.

3. Vorrichtung nach Anspruch 1-2, dadurch gekennzeichnet, daß der Kunststoff einen (nach DIN 53456 ermittelten) Kugeldruck-Wert > 80 N/mm² aufweist.

4. Vorrichtung nach Anspruch 1-3, dadurch gekennzeichnet, daß das Abschlußfenster (6) aus Allyldiglycolcarbonat (ADC) besteht.

5. Vorrichtung nach Anspruch 1-5, dadurch gekennzeichnet, daß das Abschlußfenster (6) auf seiner dem Laser (1) zugewandten Oberfläche mit einer zur Transmissionserhöhung dienenden Schicht (7) versehen ist.

**Claims**

1. Device to weld workpieces together using a laser beam, the device comprising a laser and an exit window between the laser and the workpiece, characterised in that this exit window (6) being made of a highly-interlaced duroplastic synthetic material.

2. Device according to claim 1, characterized in that the synthetic material having a modul of elasticity greater than 1,5 kN/mm² pursuant to DIN 53457.

3. Device according to claim 1 or 2, characterized in that the synthetic material having an indentation hardness of greater than 80 N/mm² pursuant to DIN 53456.

4. Device according to one of the claims 1-3, characterized in that the exit window (6) being made of allyldiglocylcarbonate (ADC).

5. Device according to one of the claims 1-4, characterized in that the exit window (6) having a layer (7) formed on the surface facing toward said laser (1) for increasing the transmission of said beam through said window.

## Revendications

1. Dispositif pour souder des pièces au moyen d'un faisceau laser, comprenant un laser et une fenêtre d'obturation placée entre le laser et la pièce à travailler, caractérisé en ce que la fenêtre d'obturation (6) est formée d'une matière synthétique thermodurcissable hautement réticulée.

2. Dispositif selon la revendication 1, caractérisé en ce que la matière synthétique présente un module d'élasticité > 1,5 kN/mm$^2$ (selon DIN 53457).

3. Dispositif selon les revendications 1-2, caractérisé en ce que la matière synthétique présente une valeur d'empreinte d'une bille (déterminée selon DIN 53456) > 80 N/mm$^2$.

4. Dispositif selon les revendications 1-3, caractérisé en ce que la fenêtre d'obturation (6) est en carbonate de diallyl glycol (ADC).

5. Dispositif selon les revendications 1-5, caractérisé en ce que la fenêtre d'obturation (6) est pourvue d'une couche (7), servant à augmenter la transmission, sur sa face dirigée vers le laser (1).